# EUROPÄISCHE PATENTSCHRIFT

(11) **EP 0 722 912 B1**
(45) Veröffentlichungstag und Bekanntmachung des Hinweises auf die Patenterteilung: **06.05.1999**
(21) Anmeldenummer: 96100111.2
(22) Anmeldetag: 05.01.1996
(51) Int. Cl.: C03C 17/23, C03C 17/02, C03C 17/00, C03C 17/22, H01J 29/89, C03C 3/087

(54) **Bildschirme für Kathodenstrahlröhren mit einem einstellbaren spektralen Transmissionsverlauf aus Glas und Verfahren zu ihrer Herstellung**
Glass screens for cathode ray tubes with controllable transmission characteristics, and method for producing them
Ecrans d'images de verre pour tubes à rayons cathodiques avec caractéristiques de transmission variables et méthode de production

(30) Priorität: 20.01.1995 DE 19501640
(43) Veröffentlichungstag der Anmeldung: 24.07.1996
(73) Patentinhaber: Schott Glas, 55122 Mainz (DE); CARL-ZEISS-STIFTUNG trading as Schott Glas, 55122 Mainz (DE)
(72) Erfinder: Segner, Johannes, Dr., D-55442 Stromberg (DE); Heming, Martin, Dr., D-55291 Saulheim (DE); Freundel, Manfred, Dr., D-55126 Mainz (DE)

(56) Entgegenhaltungen:
- EP-A- 0 452 922
- EP-A- 0 603 933
- DE-A- 4 124 875
- FR-A- 2 283 960
- US-A- 2 901 366
- DATABASE WPI Week 20 Derwent Publications Ltd., London, GB; AN 94-161652 & JP-A-06 103 931 (HITACHI LTD) , 15.April 1994
- DATABASE WPI Week 41 Derwent Publications Ltd., London, GB; AN 93-323521 & JP-A-05 234 433 (ASAHI GLASS CO. LTD.) , 10.September 1993

## Beschreibung

Die Erfindung betrifft recyclierbare Bildschirme für Kathodenstrahlröhren mit einem einstellbaren spektralen Transmissionsverlauf im sichtbaren Spektralbereich, aus einem Glas mit hoher Beständigkeit gegenüber den bei Kathodenstrahlröhren auftretenden Strahlungen, insbesondere gegenüber UV-, Röntgen- und Elektronenstrahlung, und mit einer Transmission zwischen größer 70 % und 92 % und mindestens einer auf dem Glas aufgebrachten Beschichtung, mit der der jeweils niedrigere spektrale Transmissionsverlauf zwischen 30 % und 70 % eingestellt ist. Die Erfindung zeigt auch Verfahren zur Herstellung solcher Beschichtungen auf.

Seit einigen Jahren wird die Forderung gestellt, sich aktiv an der Vermeidung von Abfällen bzw. an der Wiederverwertung von darin enthaltenen Wertstoffen zu beteiligen. Kennzeichnend dafür sind die laufend erscheinenden Pressemitteilungen zum Thema Recycling. Die Meldungen können jedoch bei genauerer Prüfung nicht darüber hinwegtäuschen, daß in vielen Fällen die Lösungen für eine stoffliche Wiederverwertung fehlen. Hauptproblem ist allgemein die sortenreine Trennung sowohl bei Kunststoffen als auch bei Metallen oder Glas.
Die anstehende deutsche Elektronikschrott-Verordnung hebt ausdrücklich auf die Wiederverwertung im Sinne des Dualen Systems ab. Man ist sich aber hinsichtlich vieler Stoffgruppen einig, daß zum überwiegenden Teil nur Down-recycling bzw. Einsatz in alternativen Produkten möglich ist.
Es ist damit zu rechnen, daß auch die Hersteller von Vorprodukten für elektrische Bauteile, wie eben von Fernsehröhren, hinsichtlich einer Wiederverwertbarkeit angesprochen werden.
Das Glas einer Fernsehröhre spielt schon auf Grund seines Gewichtes beim Recycling von Fernsehgeräten eine besondere Rolle.

Die Gründe für die Schwierigkeiten des Fernsehglasrecyclings sollen im folgenden kurz erläutert werden. Häufig werden Vergleiche mit dem Recycling in der Behälterglasindustrie angeführt. Das Beispiel ist geeignet, um die unterschiedlichen Bedingungen zu verdeutlichen, die für Recyclingmöglichkeiten bestehen. Die Behälterglasindustrie in Europa verwendet schon seit langem, zumindest bezogen auf das jeweilige Land, eine weitgehend einheitliche Glaszusammensetzung infolge einer Angleichung der Verarbeitungsmethoden und Rohstofflieferanten. Unterschiede bei der chemischen Zusammensetzung von Gläsern aus angrenzenden Ländern erschweren aber auch hier bereits das Recycling der importierten Waren. Im Mittel liegt die Recyclingquote in Deutschland derzeit bei etwa 53 %. Eine Steigerung ist nur durch eine noch striktere Trennung der Farbgläser möglich.

Die Unterschiede in der chemischen Zusammensetzung zwischen Import- und hütteneigenen Produkten, die bei Behälterglas schon bei nur wenigen Prozenten das Recycling erschweren, sind im Fernsehglas noch um vieles größer, da sich die Hersteller von Röhren und Geräten im europäischen Raum weltweit mit Glas versorgen. Hinzu kommt, daß aus verschiedenen technischen Gründen die Unterschiede in der chemischen Zusammensetzung der Fernsehgläser weiter vergrößert werden.

Deutlich erschwerend sind hierbei auch die Unterschiede in der Transmission und Farbe des Schirmglases. Es wurden und werden Geräte mit Schirmen sehr unterschiedlicher Transmissionen angeboten. Setzt man aber bei der Herstellung von Fernsehröhrenglas größere Mengen an Scherben mit unterschiedlichen Transmissionen ein, so ist die Farbe des Glases in den Schmelz-Wannen nicht mehr steuerbar. Eine Sortierung von Fernsehglas ist aber nahezu unmöglich. In keinem Fall darf schon nach einer Trennung von Bildschirm und Trichter von sortenrein getrenntem Glas gesprochen werden, da sich hinter dem gewonnenen Schirm-und Trichterglas noch immer eine Vielzahl unterschiedlicher Glaszusammensetzungen verbergen. Die Trennung macht jedoch trotzdem Sinn, da grundsätzlich in bleihaltiges und weitgehend bleifreies Glas getrennt wird. In bezug auf die Zusammensetzung des Trichterglases sind von Hersteller zu Hersteller nur geringe Unterschiede festzustellen. Das eröffnet die Möglichkeit, mit geringerem Risiko Glas in den direkten Kreislauf zurückzuführen. Die Streubreite der Zusammensetzung zwingt jedoch heute noch zu sehr begrenzter Scherben-Zugabe, damit kritische Eigenschaften des Glases noch innerhalb der Toleranzen steuerbar sind. Kritische Eigenschaften sind z.B.:
- Röntgenstrahlenabsoption,
- Farbe, Transmission, Sichtfehler,
- elektrische Durchschlagfestigkeit und
- Wärmeausdehnung.

Diese Eigenschaften werden bereits durch Veränderung der Glaszusammensetzung um wenige Zehntel Prozent beeinflußt. Eine Änderung des Ausdehnungskoeffizienten führt zu Spannungen im Schirm-Trichter-Verbund und gefährdet z. B. die Implosionssicherheit.

Die Anforderungen an die Konstanz der Eigenschaftswerte sind nur erfüllbar, wenn das Glas mit klar definierten Rohstoffen geschmolzen wird. Der Schmelzprozeß ist in seinem Ablauf und seinen Kontrollmöglichkeiten auch nicht vergleichbar mit dem Verarbeitungsvorgang. Die Verarbeitung ist durch schnelle Kontrolle der Maßhaltigkeit und entsprechende Rückkopplungen beim Auftreten von Fehlern gekennzeichnet. Der Schmelzprozeß ist ein träger Prozeß mit sehr langer Reaktionszeit von etwa 40 h, angefangen von der Einwaage der Rohstoffe bis zum fertigen Produkt. Ein Regelvorgang ist von daher nicht möglich. Wird ein Rohstoff, wie z. B. das Glasrecyclat, mit erhöhter Streubreite und Schwankungen in der Zusammensetzung verwandt, dann wird dadurch auch die Steuerbarkeit des Prozesses herabgesetzt und damit u. a. ebenso die Sicherheit, die das Produkt garantieren muß.
Die Sortiermöglichkeiten von Fernsehröhrenabfall entsprechen heute noch nicht den für einen störungsfreien Schmelzprozeß notwendigen Anforderungen. Die Wiederverwertung ist daher heute nur zu einem geringen Teil der derzeitigen Produktion möglich.

Bildschirmgläser enthalten als wesentliche Bestandteile SiO₂, Al₂O₃, BaO, Na₂O, K₂O und zusätzlich absorbierende Zusätze. Dadurch wird der Kontrast des Fernsehbildes erhöht.

Je nach Hersteller des Gerätes und Gerätetyp kann das Bildschirmglas eine unterschiedliche spektrale Transmission aufweisen, so daß eine große Vielfalt von Bildschirmgläsern mit unterschiedlicher spektraler Transmission zu erschmelzen und zu lagern sind.

Die Herstellung von Bildschirmgläsern mit unterschiedlicher spektraler Transmission erfolgt dabei derart, daß das Glas je nach Bedarf entweder diskontinuierlich aus unterschiedlichen Rohstoffzusammensetzungen nacheinander in einer Wanne oder in mehreren Wannen gleichzeitig kontinuierlich erschmolzen wird.

Um das jeweilige Glasgemenge leichter und energiegünstiger erschmelzen zu können, und um auch Scherben und Bruch wieder wirtschaftlich zu verwerten, werden Scherben und Bruch der Schmelze zum Teil wieder zugesetzt.
Dabei ist aber die Herstellung eines Bildschirmglases mit einer nicht genau definierten spektralen Transmission unbedingt zu vermeiden. Es können also nur solche Scherben zugesetzt werden, die die gleiche spektrale Transmission aufweisen, wie das zu erschmelzende Glas.
Deshalb müssen Scherben und Bruch vor Zugabe in die Glasschmelze nach spektraler Transmission geordnet gelagert werden. Dies ist sehr aufwendig.

Eine noch aufwendigere Lagerhaltung ist dann zu erwarten, wenn im Rahmen der Gesetzgebung von den Herstellern eine Rücknahmepflicht gebrauchter und ausgedienter Geräte verlangt wird. Die Hersteller von Kathodenstrahlröhren werden sehr unterschiedliche Typen von Bildschirmgläsern zurückerhalten die, wenn sie für Bildschirme wiederverwendet werden sollen, mit sehr hohem Aufwand getrennt gesammelt und getrennt gelagert werden müssen.

Es ist also einerseits mit hohem Aufwand und hohen Kosten verbunden, den Bedarf an neuen Kathodenstrahlröhren mit unterschiedlicher spektraler Transmission zu befriedigen und andererseits die aus unterschiedlichsten Gläsern bestehenden, ausgedienten Kathodenstrahlröhren wieder zu entsorgen.
Aufgabe der Erfindung ist es daher, Bildschirme für Kathodenstrahlröhren mit unterschiedlicher spektraler Transmission bereitzustellen, die die Anzahl der Schmelzen für Bildschirmgläser stark reduzieren und die außerdem gleichermaßen die Logistik bei der Lagerhaltung der Glasscherben aus Ausschuß und bei Wiederverwertung ausgedienter Kathodenstrahlröhren technisch wesentlich vereinfachen und verbilligen.

Desweiteren ist es Aufgabe der Erfindung, daß sich das, auf einen bestimmten gewünschten Transmissionsverlauf eingestellte Glas des Bildschirms, z. B. bei Recycling-Prozessen ohne jede Beeinträchtigung des Verfahrens wieder einschmelzen läßt und keine im sichtbaren Spektralbereich messbare zusätzliche Färbung des Glases resultiert, die über die Transmission des ursprünglichen Glases hinausgeht, so daß diese Gläser wieder als Bildschirme eingesetzt werden können.

Die Aufgabe der Erfindung wird dadurch gelöst, daß die Eigenschaften, die Farbe und damit auch der Transmissionsverlauf des durch Einschmelzen unter oxidierenden Bedingungen recyclierten Glases des Bildschirms gegenüber dem ursprünglichen Bildschirmglas unverändert bleiben, wobei die den niedrigeren Transmissionsverlauf einstellende Beschichtung aus mindestens
- einer der oxidischen Verbindungen besteht oder sie umfaßt, die das Bildschirmglas selbst enthält, und/oder
- aus einer oder aus mehreren der Komponenten besteht oder sie umfaßt, aus der/denen sich in der Schmelze nur die oxidischen Verbindungen ausbilden, die das Bildschirmglas selbst enthält, und/oder
- TiO₂ enthält, und/oder
- Titan oder Verbindungen des Titans enthält, aus dem/denen sich beim Einschmelzen des beschichteten Bildschirms in der Schmelze TiO₂ ausbildet, und/oder
- die in der Schmelze flüchtige Verbindungen ausbildet, die aus der Schmelze gasförmig entweichen, wenn die sich in der Schmelze bildenden Verbindungen andere Komponenten enthalten, als Titanoxid oder das Bildschirmglas selbst.

Das Wesentliche der Erfindung besteht daher darin, den Bildschirm aus einem praktisch absorptionsfreien oder nur vergleichsweise schwach absorbierenden Glas herzustellen, und die vom Hersteller für den jeweiligen Bildschirmtyp gewünschte und geforderte Transmission durch eine zusätzliche solarisationsbeständige Beschichtung einzustellen, die nur solche Bestandteile enthält, die beim Einbringen in eine Bildschirmglasschmelze den Schmelzprozess in keiner Weise stören und keine zusätzliche Färbung des aus einer solchen Schmelze hergestellten Bildschirmes im Sichtbaren bewirken.

Verbindungen, die im Bildschirmglas durch Veränderung der Transmission stören würden, werden unter den gegebenen Schmelzbedingungen oxidiert und/oder dadurch entfernt, so daß sie gasförmig aus der Schmelze entweichen.

Beispiele für störende Bestandteile sind z. B. Co-, Mn- und Fe-Oxide, die durch Ionenfärbung das Glas in seiner Transmission verändern.
Solarisationsbeständigkeit bedeutet hier die Beständigkeit besonders gegenüber solchen UV- und Röntgenstrahlungen, die bei einer Kathodenstrahlröhre zu erwarten sind.

Die Erfindung sieht vor, den Bildschirm, welcher aus einem Glas der Zusammensetzung (in Gew.-%), SiO₂ 60-63; BaO 8,3-13,0; Na₂O 6,6-9,4; K₂O 6,6-8,4; SrO 2,2-8,8; Al₂O₃ 2,0-3,4; CaO 0,1-3,2; ZrO₂ 0-2,3, und MgO 0-1,2, besteht, mit der vom Markt geforderten geringsten Grundabsorption, bzw. höchsten spektralen Transmission herzustellen, und den Bedarf an Bildschirmen mit einer niedrigeren spektralen Transmission durch eine zusätzliche geeignete Beschichtung zu decken.
Eine schwache Grundabsorption des Bildschirmglases ist gegeben, wenn der Bildschirm eine Transmission zwischen größer 70 % und 92 % besitzt.

Nach der Erfindung werden nur Beschichtungen aus Verbindungen und in solchen Zusammensetzungen auf das Glas aufgebracht, die nach Aufschmelzen des Glases zusammen mit der Beschichtung, insbesondere auch bei Recyclingprozessen keine im sichtbaren Wellenlängenbereich erkennbare Verfärbung des Glases bewirken.
Nur so ist es in Zukunft grundsätzlich möglich, Scherben aus gebrauchten Bildschirmen im Bedarfsfall unsortiert als Zuschlag für eine Neuschmelze von Bildschirmglas kostengünstig und rentabel wiederzuverwenden.

In bevorzugter Ausführungsform der Erfindung ist die Beschichtung, die auf das Glas aufgebracht ist und die den spektralen Transmissionsverlauf des Bildschirms verändert eine metallische Beschichtung, insbesondere aus den Komponenten Aluminium und/oder Titan und/oder Silizium.

Bei Versuchen hat es sich aber auch als vorteilhaft herausgestellt, wenn die, den spektralen Transmissionsverlauf verändernde Beschichtung, die auf das Glas aufgebracht ist, aus einer dielektrischen, transparenten Matrix, insbesondere aus SiO₂ oder Al₂O₃ besteht, in die metallische Anteile, insbesondere die Komponenten Titan und/oder Aluminium eingelagert sind.

In einer weiteren bevorzugten Ausführungsform der Erfindung wird die, den spektralen Transmissionsverlauf verändernde Beschichtung, die auf das Glas aufgebracht wird durch Lasereinbrand aus einer Ti-Verbindung hergestellt.
Dabei wird ein Flüssigkeitsfilm einer organischen Ti-Verbindung auf die zu beschichtende Fläche aufgebracht und durch die Strahlung eines CO₂-Lasers in eine feste C-haltige TiO₂-Schicht umgewandelt.
Infolge der hohen und spezifischen Laserleistung werden hier hohe Beschichtungsraten bei geringen Substrattemperaturen möglich.
Als besonders geeignet zur Erzielung einer hohen Absorption haben sich Chelat-Verbindungen des Titans, wie Ti(O(CH₂)₃CH₃)₄ erwiesen.

Dabei enthält die, den spektralen Transmissionsverlauf verändernde Beschichtung mindestens 10⁻⁸ Mol Metalle, insbesondere Titan und/oder Aluminium und/oder Silizium pro Quadratzentimeter beschichteter Glas-Fläche.

Sehr gute Ergebnisse wurden erzielt, wenn die, den spektralen Transmissionsverlauf verändernde Beschichtung aus amorphem Kohlenstoff, (a-C:H), besteht, wobei in diese Beschichtung die Komponente Titan eingelagert sein kann.

Es ist aber nach der vorliegenden Erfindung auch möglich, daß die Beschichtung, die auf das Glas aufgebracht ist und die den spektralen Transmissionsverlauf verändert, aus Metalloxiden, insbesondere aus TiO₂ oder SiO2 oder Al₂O₃ besteht, in die die Komponente Kohlenstoff eingelagert ist.

Der Kohlenstoff-Gehalt der Oxidschicht beträgt mindestens 5 %; mit dem Kohlenstoff-Gehalt wächst die Absorption.
Oxidschichten, die Teil von reflexvermindernden Beschichtungen nach dem Stand der Technik sind, sind für die vorgesehene Anwendung allerdings nicht geeignet.

Des weiteren kann die, den spektralen Transmissionsverlauf verändernde Beschichtung aus Carbiden, insbesondere aus Carbiden des Titans und/oder des Siliziums, oder aus einem sog. ORMOCER bestehen, in das farbgebende Stoffe, insbesondere Azo-, Nitro-, Triphenyl-, Methan-oder Carbonyl-Farbstoffe eingelagert sind.
ORMOCERe werden z. B. in INGENIEUR WERKSTOFFE, Bd. 3 (1991) Nr. 12, S. 20-22 ausführlich beschrieben.

Nach der Erfindung kann es vorteilhaft sein, die Beschichtung auf der dem Betrachter zugewandten Bildschirmaußenseite aufzubringen.
Es ist aber auch möglich, die Beschichtung auf der Bildschirminnenseite aufzubringen.

Die Beschichtung nach der Erfindung wird, bei rein metallischen Beschichtungen, in eine Schichtdicke von etwa 1 nm bis 15 nm, insbesondere von 2 nm bis 8 nm, bei Matrix-Schichten in einer Schichtdicke von etwa 10 nm bis 5000 nm, insbesondere von 20 nm bis 500 nm auf die Bildschirme aus Glas aufgebracht.

Je nach Art der Beschichtung muß die Schichtdicke jedoch in einfachen Vorversuchen jeweils für einen bestimmten Transmissionsgrad ermittelt werden.

In manchen Fällen hat es sich auch als vorteilhaft erwiesen, wenn die den spektralen Transmissionsverlauf verändernde Beschichtung von einer weiteren dielektrischen, transparenten Beschichtung, insbesondere aus SiO₂, CaF₂, Al₂O₃ oder von einer ORMOCER-Schicht ohne zusätzliche farbgebende Stoffe, als Schutzschicht für das beschichtete Glas überlagert ist.

Die Beschichtungen nach der Erfindung werden mit an sich bekannten Herstellverfahren auf die Gläser aufgebracht.

So hat es sich bewährt, wenn die Beschichtung nach einem PVD-Verfahren gebildet und insbesondere durch Kathodenzerstäubung, lonengestütztes Verdampfen oder Hochvakuumverdampfung auf das Glas aufgebracht wird, oder wenn die Beschichtung durch ein Pyrolyseverfahren auf dem Glas ausgebildet und insbesondere über ein Sprüh-, Heißsprüh-, Schleuder- oder Tauchverfahren aufgebracht wird.

Pyrolyse-Verfahren sind beispielsweise aus der DE 23 63 319 C2, aus der FR 2.664.259 A1 oder der FR 2.664.260 A1 bekannt.
Hier werden Pyrolyse-Verfahren zur Herstellung von grauen Schichten aus metallorganischen Lösungen angegeben, die Al und Ti bzw. Al und Sn enthalten. Durch die Sn-Komponente wird die ausgebildete Schicht darüber hinaus elektrisch ausreichend leitfähig und somit antistatisch.

Weitere Möglichkeiten bestehen darin, die Beschichtung mittels eines CVD, insbesondere mittels eines PCVD-Verfahrens auf dem Glas auszubilden oder durch Beschichtung im Sol-Gel Verfahren, insbesondere mittels IR-Trocknung und/oder Lasereinbrand herzustellen.

Bei der Wiederverwertung des so beschichteten Bildschirmes durch Einschmelzen unter oxidierenden Schmelzbedingungen werden dann die Verbindungen aus denen diese Schichten gebildet werden und die im Bildschirmglas durch Veränderung der Transmission stören würden, oxidiert und entfernt.

Zur weiteren Verdeutlichung und Erklärung der Erfindung sollen die folgenden Ausführungsbeispiele dienen:

### Beispiel 1:

Auf die Außenfläche eines Fernsehbildschirmes mit der Glaszusammensetzung (in Gew.-%) Na₂O 8,4; K₂O 7,6; MgO 0,6; CaO 1,2; SrO 5,6; BaO 10,8, Al₂O₃ 2,8; ZrO 1,0 und SiO₂ 62 wird eine Lösung als Flüssigkeitsfilm aufgebracht. Die Lösung enthält als Titanverbindungen Titanalkoxide und chelatbildende Verbindungen. Anschließend wird eine Strahlung hoher Intensität mittels eines CO₂-Lasers erzeugt, der die zur Reaktion der Flüssigkeitsfilms notwendige Energie dem Substrat zuführt und dadurch eine etwa 90 nm dicke TiO₂-Schicht aufgebracht, die in der Durchsicht neutralgrau erscheint, bei einer Transmission von etwa 60 %.
Die mit den Chelaten modifizierte TiO₂-Beschichtungslösung wird z. B. aus
- 137,0 ml: Ti[O(CH₂)₃CH₃]₄
- 832,0 ml: Ethanol
- 10,1 ml: Actylaceton
- 17,4 ml: Ethyl-butyrylacetat
hergestellt.

Diese Lösung wird in einem, mit 26 °C klimatisierten Raum mit 7 - 12 g/m³, insbesondere mit 8 g/m³ Luftfeuchtigkeit auf ein Glassubstrat aufgebracht, in dem das gut gereinigte Glassubstrat in die Lösung eingetaucht und mit einer Geschwindigkeit von 0,3 bis 0,5 cm/s wieder herausgezogen wird. Sofort anschließend wird mit einem CO₂-Laser über das Substrat eingebrannt.

Die Herstellungsparameter sind dabei:

| | |
|---|---|
| Laserleistung (P/W): | 16,7 |
| Scan-Geschwindigkeit (v/cm-s⁻¹): | 76,8 |

Durch Schmelzversuche unter oxidierenden Bedingungen konnte nachgewiesen werden, daß die TiO₂-Schicht das Schmelzverhalten und die relevanten Parameter, insbesondere die Transmission des daraus erschmolzenen Glases im Hinblick auf seine spätere Verwendung in keiner Weise beeinträchtigt.

### Beispiel 2:

Der zu beschichtende Fernsehbildschirm (Querformat 70") wird mit seiner Außenfläche in einer Hochvakuumbeschichtungsanlage im Abstand von etwa 50 cm zur Aufdampfquelle, einem mit Al gefüllten Tiegel eines Elektronenstrahlverdampfers, angeordnet. Die Anlage wird zunächst auf einen Druck von 0,0001 mbar abgepumpt, Sauerstoff einströmen gelassen, bis sich ein Druck von etwa 0,001 mbar einstellt. Anschließend wird eine Sauerstoffglimmentladung mit einer Spannung von 2,5 kV gezündet und 30 s aufrechterhalten, um die zu beschichtende Oberfläche zu konditionieren.

Anschließend läßt man auf einen Druck < 0,0001 mbar abpumpen und schaltet den Verdampfer ein. Nach Einstellung der Beschichtungsrate unter einer Blende öffnet man diese, läßt auf dem Fernsehbildschirm eine etwa 5 nm dicke Al-Schicht kondensieren und schließt die Blende.
Diese Schicht besitzt eine weitgehend wellenlängenunabhängige Lichtdurchlässigkeit von 50 ± 3 %.
Um die Al-Schicht beständig gegen Umwelteinflüsse zu machen, wird anschließend mittels eines weiteren Verdampfers eine absorptionsarme harte Schicht aufgedampft, z. B. eine 200 nm dicke CaF₂-Schicht oder eine 1000 nm dicke SiO₂- oder Al₂O₃-Schicht.

Durch Schmelzversuche unter oxidierenden Bedingungen konnte nachgewiesen werden, daß die aufgebrachten Schichten das Schmelzverhalten des beschichteten Glassubstrates und relevante Parameter des erschmolzenen Glases nicht beeinträchtigen.

### Beispiel 3:

Der zu beschichtende Fernsehbildschirm (Querformat 70") wird mit seiner Innenfläche in einer Hochvakuumbeschichtungsanlage im Abstand von etwa 50 cm zur Aufdampfquelle, einem mit Ti gefüllten Wolframtiegel angeordnet. Die Anlage wird zunächst auf einen Druck von 0,0001 mbar abgepumpt, Sauerstoff einströmen gelassen, bis sich ein Druck von etwa 0,001 mbar einstellt, eine Sauerstoffglimmentladung mit einer Spannung von 2,5 kV gezündet und 30 s aufrechterhalten, um die zu beschichtende Oberfläche zu konditionieren.

Anschließend läßt man auf einen Druck < 0,0001 mbar abpumpen und heizt den W-Tiegel. Nach Einstellung der Beschichtungsrate unter einer Blende öffnet man diese, läßt auf dem Fernsehbildschirm eine etwa 7 nm dicke Ti-Schicht kondensieren und schließt die Blende.
Diese Schicht besitzt eine weitgehend wellenlängenunabhängige Lichtdurchlässigkeit von 40 ± 2 %.

Um die Ti-Schicht bis zur Fertigstellung der Fernsehröhre beständig gegen Umwelteinflüsse zu machen, wird anschliebend mittels eines zweiten Verdampfertiegels eine absorptionsarme Schicht aufgedampft, z. B. eine 10 nm dicke CaF₂-Schicht.
Durch Schmelzversuche unter oxidierenden Bedingungen konnte nachgewiesen werden, daß die aufgebrachten Schichten das Schmelzverhalten des beschichteten Glassubstrates und relevante Parameter des erschmolzenen Glases nicht beeinträchtigen.

### Beispiel 4:

Nachfolgend ein Beispiel für die Beschichtung des Glases mit einer neutralgrauen Heißsprühschicht:
Als Beschichtungslösung werden die Lösungen (1) und (2) miteinander vermischt.
- Lösung (1):: 50 g SnCl₄ werden in 70 g Methanol gelöst,
- Lösung (2):: 1,2 g SbCl₄ und 0,5 g Titanacetylacetonat werden in 50 g Ethanol gelöst.

Das Glas wird 5 min in einem Ofen mit einer Temperatur von 480 - 520 °C aufgeheizt. Danach wird es unmittelbar mit der Beschichtungslösung besprüht.
Das Ergebnis ist eine weitgehend neutralgraue Schicht über den sichtbaren Bereich des Spektrums.
Auch hier beeinträchtigt die so hergestellte Schicht das Schmelzverhalten des beschichteten Glases nicht, und sie verursacht auch keine im sichtbaren Spektralbereich messbare zusätzliche Färbung des Glases, die über die Transmission des unbeschichteten Glases hinausgeht.

Die vorliegende Erfindung zeigt eine Möglichkeit auf, aus Glaszusammensetzungen mit einer Transmission zwischen größer 70 und 90 % Bildschirme herzustellen, die den von Herstellern und durch den Gerätetyp vorgegebenen einzustellenden spektralen Transmissionsverlauf zwischen 30 und 70 % zur Erhöhung des Bildschirmkontrastes, durch eine Beschichtung auf dem Bildschirm erreichen, und die sich nach ihrem Gebrauch auch problemlos aufschmelzen und wieder zu Bildschirmen und Vorsatzscheiben verarbeiten lassen, ohne daß eine zusätzliche Färbung auftreten würde und/oder die Gebrauchseigenschaften beeinträchtigt werden würden. Hierdurch sind ganz erhebliche Vorteile bei der Produktion und beim Recycling gegeben.

## Patentansprüche

1. Recyclierbarer Bildschirm für Kathodenstrahlröhren mit einem einstellbaren Transmissionsverlauf im sichtbaren Spektralbereich zwischen λ = 380 - 780 nm, aus einem Glas, mit einer Transmission zwischen größer 70 % und 92 % und mindestens einer auf dem Glas aufgebrachten Beschichtung, mit der der jeweils niedrigere spektrale Transmissionsverlauf zwischen 30 % und 70 % eingestellt ist,
**dadurch gekennzeichnet**,
daß die Eigenschaften, und die Farbe und damit auch der Transmissionsverlauf des durch Einschmelzen unter oxidierenden Bedingungen recycelten Glases des Bildschirms gegenüber dem ursprünlichen Bildschirmglas unverändert bleiben, wobei die den niedrigeren Transmissionsverlauf einstellende Beschichtung
- aus mindestens einer der oxidischen Verbindungen besteht oder sie umfaßt, die das Bildschirmglas selbst enthält, und/oder
- aus einer oder mehreren der Komponenten besteht oder sie umfaßt, aus der/denen sich beim Einschmelzen des beschichteten Bildschirms in der Schmelze die oxidischen Verbindungen ausbilden, die das Bildschirmglas selbst enthält, und/oder
- TiO₂ enthält, und/oder
- Titan oder Verbindungen des Titans enthält, aus dem/denen sich beim Einschmelzen des beschichteten Bildschirms in der Schmelze TiO₂ ausbildet, und/oder
- in der Schmelze flüchtige Verbindungen ausbildet, die aus der Schmelze gasförmig entweichen, wenn die sich in der Schmelze bildenden Verbindungen andere Komponenten enthalten, als Titanoxid oder das Bildschirmglas selbst.

2. Recyclierbarer Bildschirm nach Anspruch 1,
**dadurch gekennzeichnet**,
daß der Bildschirm aus einem Glas der Zusammensetzung (in Gew.-%, auf Oxidbasis) SiO₂ 60-63; BaO 8,3-13,0; Na₂O 6,6-9,4; K₂O 6,6-8,4; SrO 2,2-8,8; Al₂O₃ 2,0-3,4; CaO 0,1-3,2; ZrO₂ 0,0-2,3 und MgO 0,0-1,2, besteht.

3. Recyclierbarer Bildschirm nach den Ansprüchen 1 und 2,
**dadurch gekennzeichnet**,
daß die Beschichtung, die auf das Glas aufgebracht ist und die den spektralen Transmissionsverlauf des Bildschirms verändert, eine metallische Beschichtung aus den Komponenten Aluminium und/oder Titan und/oder Silizium ist.

4. Recyclierbarer Bildschirm nach den Ansprüchen 1 und 2,
**dadurch gekennzeichnet**,
daß die, den spektralen Transmissionsverlauf verändernde Beschichtung, die auf das Glas aufgebracht ist, aus SiO₂ oder Al₂O₃ als dielektrische, transparente Matrix besteht, in die als metallische Anteile die Komponenten Titan und/oder Aluminium eingelagert sind.

5. Recyclierbarer Bildschirm nach den Ansprüchen 1 und 2,
**dadurch gekennzeichnet**,
daß die, den spektralen Transmissionsverlauf verändernde Beschichtung, die auf das Glas aufgebracht ist, aus einer Titan-Verbindung, die aus Ti(O(CH₂)₃CH₃)₄ gebildet wird, besteht.

6. Recyclierbarer Bildschirm nach den Ansprüchen 1 bis 5,
**dadurch gekennzeichnet**,
daß die, den spektralen Transmissionsverlauf verändernde Beschichtung mindestens 10⁻⁸ Mol Metalle als Komponenten, insbesondere Titan und/oder Aluminium und/oder Silizium pro Quadratzentimeter beschichteter Glas-Fläche enthält.

7. Recyclierbarer Bildschirm nach den Ansprüchen 1 und 2,
**dadurch gekennzeichnet**,
daß die, den spektralen Transmissionsverlauf verändernde Beschichtung aus amorphem Kohlenstoff, (a-C:H), besteht.

8. Recyclierbarer Bildschirm nach Anspruch 7,
**dadurch gekennzeichnet**,
daß in die Beschichtung aus amorphem Kohlenstoff die Komponente Titan eingelagert ist.

9. Recyclierbarer Bildschirm nach den Ansprüchen 1 und 2,
**dadurch gekennzeichnet**,
daß die Beschichtung, die auf das Glas aufgebracht ist und die den spektralen Transmissionsverlauf verändert, aus den Metalloxiden TiO₂ oder SiO₂ oder Al₂O₃ besteht, in die die Komponente Kohlenstoff eingelagert ist.

10. Recyclierbarer Bildschirm nach den Ansprüch 1 und 2,
**dadurch gekennzeichnet**,
daß die, den spektralen Transmissionsverlauf verändernde Beschichtung aus Carbiden, insbesondere aus Carbiden des Titans und/oder des Siliziums besteht.

11. Recyclierbarer Bildschirm nach den Ansprüchen 1 und 2,
**dadurch gekennzeichnet**,
daß die den spektralen Transmissionsverlauf verändernde Beschichtung, die auf das Glas aufgebracht ist, aus einem sog. ORMOCER besteht, in das farbgebende Stoffe, insbesondere Azo-, Nitro-, Triphenyl-, Methan-oder Carbonyl-Farbstoffe eingelagert sind.

12. Recyclierbarer Bildschirm nach den Ansprüchen 1 bis 11,
**dadurch gekennzeichnet**,
daß die, den spektralen Transmissionsverlauf verändernde Beschichtung von einer weiteren dielektrischen, transparente Beschichtung, insbesondere aus SiO₂, CaF₂, Al₂O₃ oder von einer ORMOCER-Schicht ohne zusätzliche farbgebende Stoffe, als Schutzschicht für das beschichtete Glas überlagert ist.

13. Recyclierbarer Bildschirm nach den Ansprüchen 1 bis 12,
**dadurch gekennzeichnet**,
daß die Beschichtung auf der Innenseite des Bildschirms aufgebracht ist.

14. Verfahren zur Herstellung eines recyclierbaren Bildschirms nach einem oder mehreren der vorhergehenden Ansprüche,
**dadurch gekennzeichnet**,
daß die Beschichtung nach einem PVD-Verfahren, insbesondere durch Kathodenzerstäubung, ionengestütztes Verdampfen oder Hochvakuumverdampfung auf das Glas aufgebracht wird.

15. Verfahren zur Herstellung eines recyclierbaren Bildschirms nach einem oder mehreren der vorhergehenden Ansprüche 1 bis 13,
**dadurch gekennzeichnet**,
daß die Beschichtung über ein Sprüh-, Heißsprüh-, Schleuder- oder Tauchverfahren aufgebracht und durch ein Pyrolyseverfahren oder mittels Lasereinbrand auf dem Glas ausgebildet wird.

16. Verfahren zur Herstellung eines recyclierbaren Bildschirms nach einem oder mehreren der vorhergehenden Ansprüche 1 bis 13,
**dadurch gekennzeichnet**,
daß die Beschichtung mittels eines CVD, insbesondere mittels eines PCVD- Verfahrens auf dem Glas ausgebildet wird.

17. Verfahren zur Herstellung eines recyclierbaren Bildschirms nach mindestens einem der vorhergehenden Ansprüche 1 bis 13,
**dadurch gekennzeichnet**,
daß die Beschichtung im Sol-Gel Verfahren, insbesondere mittels IR-Trocknung und/oder Lasereinbrand, ausgebildet wird.

## Claims

1. Recyclable display screen for cathode-ray tubes with an adjustable transmission characteristic in the visible spectral range between λ = 380-780 nm, made of glass, with a transmission of between more than 70% and 92% and at least one coating applied to the glass, by which the respectively lower spectral transmission characteristic is adjusted between 30% and 70%,
characterized in that the properties, and the colour and therefore also the transmission characteristic of the display screen glass, which is recycled by fusing under oxidizing conditions, remain unchanged from those of the original display screen glass, it being the case that the coating which adjusts the lower transmission characteristic
- consists of or comprises at least one of the oxide compounds contained by the display screen glass itself, and/or
- consists of or comprises one or more of the components from which the oxide compounds which the display screen glass itself contains are formed when the coated display screen is fused in the melt, and/or
- contains TiO₂, and/or
- contains titanium or titanium compounds from which TiO₂ is formed when the coated display screen is fused in the melt, and/or
- forms, in the melt, volatile compounds which are released in the form of gases from the melt if the compounds being formed in the melt contain components other than titanium oxide or the display screen glass itself.

2. Recyclable display screen according to Claim 1, characterized in that
the display screen consists of a glass with the composition (in % by weight based on oxide) SiO₂ 60-63; BaO 8.3-13.0; Na₂O 6.6-9.4; K₂O 6.6-84; SrO 2.2-8.8; Al₂O₃ 2.0-3.4; CaO 0.1-3.2; ZrO₂ 0.0-2.3 and MgO 0.0-1.2.

3. Recyclable display screen according to Claims 1 and 2, characterized in that
the coating which is applied to the glass and alters the spectral transmission characteristic of the display screen is a metallic coating made of the components aluminium and/or titanium and/or silicon.

4. Recyclable display screen according to Claims 1 and 2, characterized in that
the coating altering the spectral transmission characteristic, which is applied to the glass, consists of SiO₂ or Al₂O₃ as dielectric, transparent matrix in which the components titanium and/or aluminium are incorporated as metallic contributions.

5. Recyclable display screen according to Claims 1 and 2, characterized in that
the coating altering the spectral transmission characteristic, which is applied to the glass, consists of a titanium compound which is formed from Ti(O(CH₂)₃CH₃)₄.

6. Recyclable display screen according to Claims 1 to 5, characterized in that
the coating altering the spectral transmission characteristic contains at least 10⁻⁸ mol of metals as components, in particular titanium and/or aluminium and/or silicon, per square centimetre of coated glass surface.

7. Recyclable display screen according to Claims 1 and 2, characterized in that
the coating altering the spectral transmission characteristic consists of amorphous carbon (a-C:H)

8. Recyclable display screen according to Claim 7, characterized in that
the component titanium is incorporated in the amorphous carbon coating.

9. Recyclable display screen according to Claims 1 and 2, characterized in that
the coating which is applied to the glass and alters the spectral transmission characteristic consists of the metal oxides TiO₂ or SiO₂ or Al₂O₃, in which the component carbon is incorporated.

10. Recyclable display screen according to Claim 1 and 2, characterized in that
the coating altering the spectral transmission characteristic consists of carbides, in particular carbides of titanium and/or silicon.

11. Recyclable display screen according to Claims 1 and 2, characterized in that
the coating altering the spectral transmission characteristic, which is applied to the glass, consists of so-called ORMOCER, in which colorants, in particular azo, nitro, triphenyl, methane or carbonyl dyes, are incorporated.

12. Recyclable display screen according to Claims 1 to 11, characterized in that
the coating altering the spectral transmission characteristic is covered by a further dielectric, transparent coating, in particular of SiO₂, CaF₂, Al₂O₃ or by an ORMOCER layer without additional colorants, as a protective layer for the coated glass.

13. Recyclable display screen according to Claims 1 to 12, characterized in that
the coating is applied to the inside of the display screen.

14. Process for the production of a recyclable display screen according to one or more of the preceding claims, characterized in that
the coating is applied to the glass using a PVD method, in particular by sputtering, ion-assisted evaporation or high-vacuum evaporation.

15. Process for the production of a recyclable display screen according to one or more of the preceding Claims 1 to 13, characterized in that
the coating is formed on the glass via a spray, hot-spray, spin or dip method and by a pyrolysis method or by means of laser irradiation.

16. Process for the production of a recyclable display screen according to one or more of the preceding Claims 1 to 13, characterized in that
the coating is formed on the glass by means of CVD, in particular by means of a PCVD method.

17. Process for the production of a recyclable display screen according to at least one of the preceding Claims 1 to 13, characterized in that
the coating is formed using the sol-gel method, in particular by means of IR drying and/or laser irradiation.

## Revendications

1. Ecran d'affichage recyclable pour tubes à rayons cathodiques, ayant une courbe de transmission ajustable dans le domaine spectral visible avec λ compris entre 380 et 780 nm, en verre, ayant une transmission comprise entre plus de 70 % et 92 %, et au moins un revêtement appliqué sur le verre, grâce auquel la courbe de transmission spectrale à chaque fois inférieure respective est ajustée à une valeur comprise entre 30 % et 70 %, caractérisé en ce que les propriétés et la couleur et, par conséquent, également la courbe de transmission du verre recyclé par fusion dans des conditions oxydantes, de l'écran d'affichage restent inchangées par rapport au verre de l'écran d'affichage d'origine, le revêtement ajustant la courbe de transmission inférieure
- se composant d'au moins une des composés oxydés ou comprenant ceux que le verre de l'écran d'affichage contient lui-même, et/ou
- se composant d'un ou de plusieurs des composants ou comprenant celui/ceux à partir duquel/desquels se forment, lors de la fusion de l'écran d'affichage revêtu dans la masse fondue, les composés oxydés que le verre de l'écran d'affichage contient luimême, et/ou
- contenant TiO₂, et/ou
- contenant du titane ou des composés du titane, à partir duquel/desquels TiO₂ se forme lors de la fusion de l'écran d'affichage revêtu dans la masse fondue, et/ou
- formant dans la masse fondue des composés volatils qui s'échappent de la masse fondue sous forme gazeuse, lorsque les composés se formant dans la masse fondue contiennent d'autres composants que le dioxyde de titane ou le verre de l'écran d'affichage lui-même.

2. Ecran d'affichage recyclable selon la revendication 1, caractérisé en ce que l'écran d'affichage se compose d'un verre de composition (en % en poids sur la base des oxydes) SiO₂ 60-63; BaO 8,3-13,0; Na₂O 6,6-9,4; K₂O 6,6-8,4; SrO 2,2-8,8; Al₂O₃ 2,0-3,4; CaO 0,1-3,2; ZrO₂ 0,0-2,3 et MgO 0,0-1,2.

3. Ecran d'affichage recyclable selon les revendications 1 et 2, caractérisé en ce que le revêtement, qui est appliqué sur le verre et qui modifie la courbe de transmission spectrale de l'écran d'affichage, est un revêtement métallique à base des composants aluminium et/ou titane et/ou silicium.

4. Ecran d'affichage recyclable selon les revendications 1 et 2, caractérisé en ce que le revêtement modifiant la courbe de transmission spectrale, qui est appliqué sur le verre, se compose de SiO₂ ou de Al₂O₃ en tant que matrice transparente diélectrique, dans laquelle les composants titane et/ou aluminium sont incorporés en tant que constituants métalliques.

5. Ecran d'affichage recyclable selon les revendications 1 et 2, caractérisé en ce que le revêtement modifiant la courbe de transmission spectrale, qui est appliqué sur le verre, se compose d'un composé du titane, qui est formé de Ti(O(CH₂)₃CH₃)₄.

6. Ecran d'affichage recyclable selon les revendications 1 à 5, caractérisé en ce que le revêtement modifiant la courbe de transmission spectrale contient au moins 10⁻⁸ mole de métaux en tant que composants, en particulier de titane et/ou d'aluminium et/ou de silicium par centimètre carré de surface de verre revêtue.

7. Ecran d'affichage recyclable selon les revendications 1 et 2, caractérisé en ce que le revêtement modifiant la courbe de transmission spectrale se compose de carbone amorphe (a-C:H).

8. Ecran d'affichage recyclable selon la revendication 7, caractérisé en ce que le composant titane est incorporé dans le revêtement en carbone amorphe.

9. Ecran d'affichage recyclable selon les revendications 1 et 2, caractérisé en ce que le revêtement qui est appliqué sur le verre et qui modifie la courbe de transmission spectrale, se compose des oxydes métalliques TiO₂ ou SiO₂ ou Al₂O₃, dans lesquels le composant carbone est incorporé.

10. Ecran d'affichage recyclable selon les revendications 1 et 2, caractérisé en ce que le revêtement modifiant la courbe de transmission spectrale se compose de carbures, en particulier de carbures du titane et/ou du silicium.

11. Ecran d'affichage recyclable selon les revendications 1 et 2, caractérisé en ce que le revêtement modifiant la courbe de transmission spectrale, qui est appliqué sur le verre, se compose de ce que l'on appelle l'ORMOCER, dans lequel des substances chromophores, en particulier des colorants azoïques, nitro, triphényle, méthane ou carbonyle sont incorporés.

12. Ecran d'affichage recyclable selon les revendications 1 à 11, caractérisé en ce que le revêtement modifiant la courbe de transmission spectrale est pourvu en superposition, à titre de protection pour le verre revêtu, d'un revêtement transparent diélectrique supplémentaire, en particulier de SiO₂, de CaF₂, de Al₂O₃ ou d'une couche d'ORMOCER, sans substance chromophore supplémentaire.

13. Ecran d'affichage recyclable selon les revendications 1 à 12, caractérisé en ce que le revêtement est appliqué sur la face interne de l'écran d'affichage.

14. Procédé de fabrication d'un écran d'affichage recyclable selon une ou plusieurs des revendications précédentes, caractérisé en ce que le revêtement est appliqué sur le verre, conformément à un procédé PVD, en particulier par pulvérisation cathodique, par vaporisation assistée par des ions ou par vaporisation sous vide poussé.

15. Procédé de fabrication d'un écran d'affichage recyclable selon une ou plusieurs des revendications précédentes 1 à 13, caractérisé en ce que le revêtement est appliqué à l'aide d'un procédé de pulvérisation, de pulvérisation à chaud, de projection ou d'immersion et qu'il est formé sur le verre par un procédé de pyrolyse ou par l'intermédiaire d'une cuisson au laser.

16. Procédé de fabrication d'un écran d'affichage recyclable selon une ou plusieurs des revendications précédentes 1 à 13, caractérisé en ce que le revêtement est formé sur le verre par l'intermédiaire d'un procédé CVD, en particulier d'un procédé PCVD.

17. Procédé de fabrication d'un écran d'affichage recyclable selon au moins l'une des revendications précédentes 1 à 13, caractérisé en ce que le revêtement est formé dans le procédé sol-gel, en particulier par l'intermédiaire d'un séchage infrarouge et/ou par cuisson au laser.
